**Europäisches Patentamt**

(19) **European Patent Office**

**Office européen des brevets**

(11) Numéro de publication: **0 045 266**
**A2**

# (12) DEMANDE DE BREVET EUROPEEN

(21) Numéro de dépôt: **81401216.7**

(22) Date de dépôt: **29.07.81**

(51) Int. Cl.³: **G 05 D 23/185,** F 24 D **19/10**

(30) Priorité: **30.07.80 LU 82670**

(43) Date de publication de la demande: **03.02.82**
**Bulletin 82/5**

(84) Etats contractants désignés: **BE CH DE FR GB IT LI SE**

(71) Demandeur: **MOTEURS LEROY-SOMER Société dite:,**
**Boulevard Marcellin Leroy, F-16000 Angouleme (FR)**

(72) Inventeur: **Trepeau, Pierre, Les Six Moulins,**
**F-17320 Marennes (FR)**
Inventeur: **Gaudin, Claude, Residence les Grossines,**
**F-17320 Marennes (FR)**

(74) Mandataire: **Bouju, André, 38 Avenue de la Grande**
**Armée, F-75017 Paris (FR)**

(54) **Procédé pour commander une installation de chauffage comprenant deux appareils de chauffe, régulateur et installation de chauffage s'y rapportant.**

(57) L'installation comprend un chauffage de base et un chauffage d'appoint. Le procédé vise plus particulièrement à mettre sélectivement en fonctionnement le chauffage d'appoint, en plus du chauffage de base, en fonction des besoins.

On relève l'évolution en fonction du temps (t) d'une température (T) caractéristique de l'état de l'installation. On autorise l'arrêt (A) de l'appoint lorsqu'on détecte une phase de croissance suffisamment prononcée de la température (points $t_{10}$, $t_{13}$, $t_{22}$). On autorise la mise en marche (M) de l'appoint lorsqu'on détecte une baisse ou une stagnation suffisamment prononcée de la température (points $t_7$, $t_{12}$, $t_{15}$, $t_{20}$).

Utilisation pour n'utiliser l'appoint que lorsque c'est strictement nécessaire.

"Procédé pour commander une installation de chauffage comprenant deux appareils de chauffe, régulateur et installation de chauffage s'y rapportant"

La présente invention concerne un procédé pour commander le fonctionnement d'une installation de chauffage comprenant au moins deux appareils de chauffe.

L'invention concerne également un régulateur pour la mise en oeuvre de ce procédé.

L'invention concerne aussi une installation de chauffage faisant application de ce procédé.

L'invention vise tout système de chauffage, pour toute utilisation, mais est de préférence appliquée au chauffage domestique.

Les installations de chauffage comprenant au moins deux appareils de chauffe sont appréciées pour diverses raisons. Lorsqu'une faible puissance de chauffe seulement est désirée, on améliore le rendement en ne mettant en marche qu'un certain nombre des appareils à puissance nominale, et non la totalité à puissance réduite.

Si les appareils sont de nature différente, on a aussi l'avantage de diversifier les approvisionnements.

Certaines installations comprennent un appareil de chauffage de base -chauffage solaire par exemple- économique en ce qui concerne l'énergie calorifique produite, mais impliquant un investissement élevé, qui dépend d'ailleurs de sa puissance, et un appareil de chauffage d'appoint -par exemple électrique-, qui produit une énergie coûteuse, mais correspond à un investissement initial faible.

Dans ces conditions, le chauffage d'appoint est destiné à fournir un complément à la puissance du chauffage de base, cette dernière étant volontairement limitée de manière à réduire le coût de l'installation. L'intérêt pécuniaire de l'utilisateur est donc dans ce cas que le chauffage d'appoint fonctionne le moins possible.

On connaît différents systèmes de régulation qui ont pour but de commander le fonctionnement de telles installations. Dans ces systèmes, et même si les deux appareils sont de même nature, ou identiques, l'un tient le rôle d ' appareil de base et l'autre le rôle d'appareil
d'appoint. Cette terminologie pour les appareils de chauffage sera systématiquement adoptée dans la suite du brevet
sans qu'elle ait un sens limitatif quant à la portée de la
protection.

Dans certains systèmes connus, un régulateur fait
la différence entre la température de consigne et la température extérieure, calcule la température théoriquement
idéale du fluide caloporteur en fonction de cette différence, et commande l'enclenchement ou l'arrêt de l'appareil d'appoint selon que la température réelle du fluide
caloporteur est inférieure ou supérieure à sa température
théorique.

Selon un autre système connu, l'appareil d'appoint ne peut fonctionner qu'en dessous d'une certaine température extérieure. Si c'est le cas, un thermostat à double étage enclenche l'appareil de base uniquement si la
différence entre la température des locaux et la température de consigne atteint une certaine valeur, et enclenche
en outre l'appareil d'appoint si cette différence atteint
une seconde valeur plus importante.

Ces systèmes ne donnent pas entière satisfaction.
En effet, la température extérieure n'est pas le seul facteur déterminant pour la puissance de chauffe nécessaire.
On doit en effet tenir compte aussi de l'ensoleillement,
de la ventilation interne des locaux, des apports calorifiques internes provenant par exemple d'un feu de bois dans
une cheminée, d'une cuisinière ou autre appareil en fonctionnement, ou de la présence de personnes en plus ou moins
grand nombre dans les locaux.

Par ailleurs, la différence entre la température
de consigne et la température réelle des locaux ne donne
pas non plus une indication satisfaisante pour commander
la mise en route de l'appoint. Ceci est particulièrement vrai dans le cas des montées en température pendant lesquelles on relève de fortes insuffisances de la température réelle par rapport à la température de consigne du local, ou de la température du fluide par rapport à la température théorique, sans pour autant que la puissance de l'appareil de base soit nécessairement insuffisante pour assurer cette montée en température.

Le but de l'invention est de remédier à ces inconvénients en proposant un procédé pour commander un appareil de chauffage d'appoint de façon à assurer son fonctionnement sur des durées à la fois moins longues et mieux situées dans le temps.

Suivant l'invention, le procédé pour commander une installation comprenant au moins deux appareils de chauffe, à savoir un appareil de chauffage de base et un appareil de chauffage d'appoint, en vue de mettre sélectivement en fonctionnement l'appareil d'appoint en plus de l'appareil de base en fonction des besoins, procédé dans lequel on mesure une température représentative de l'état de l'installation, est caractérisé en ce qu'on relève l'évolution de cette température en fonction du temps, en ce qu'on commande l'arrêt de l'appoint lorsqu'on détecte une phase de croissance suffisamment prononcée de la température et en ce qu'on commande la mise en marche de l'appareil d'appoint lorsqu'on détecte une phase de décroissance suffisamment prononcée de la température.

Il a en effet été trouvé, dans le cadre de l'invention, que tant que la température représentative est en hausse, c'est que l'appareil de base peut à lui seul faire évoluer favorablement l'état de l'installation et qu'il est inutile de mettre en service l'appareil d'appoint.

Au contraire, en cas de décroissance prononcée de la température représentative, on en déduit que l'appareil d'appoint est nécessaire pour faire évoluer favorablement l'état de l'installation.

La durée de fonctionnement de l'appareil d'appoint est ainsi considérablement réduite. Par exemple l'appoint n'est pas systématiquement mis en marche lors des coûteuses mises en température après un arrêt prolongé de l'installation.

Selon un autre objet de l'invention, le régulateur de fonctionnement pour une installation de chauffage comprenant au moins deux appareils de chauffage, à savoir un appareil de chauffage de base et un appareil de chauffage d'appoint, notamment pour la mise en oeuvre du procédé ci-dessus est caractérisé en ce qu'il comprend un convertisseur analogique-numérique dont une entrée est destinée à être reliée à une sonde de température dont l'organe sensible est au contact d'un milieu soumis à une température représentative de l'état de l'installation, des moyens pour mettre en mémoire au moins les deux dernières valeurs numériques provenant du convertisseur, des moyens de comparaison de ces valeurs numériques et des moyens de commande de l'appareil d'appoint en fonction du résultat de cette comparaison.

Selon un troisième objet de l'invention, l'installation de chauffage, notamment pour la mise en oeuvre du procédé ci-dessus, comprenant un appareil de chauffage de base, un appareil de chauffage d'appoint, une sonde de température dont l'organe sensible est en contact avec un milieu dont la température est représentative de l'état de l'installation, et un régulateur commandant le fonctionnement de l'appareil d'appoint en fonction de l'évolution de cette température, est caractérisée en ce que cette installation comprend en outre un système thermostatique qui commande la mise en marche et l'arrêt de l'appareil de base, et qui interdit ou autorise la marche de l'appareil d'appoint.

Contrairement à l'état de la technique, le régulateur a une fonction distincte du thermostat qui est d'éviter la baisse de température dans l'installation tout en réduisant le plus possible la durée de fonctionnement de l'appareil d'appoint. Le thermostat arrête le fonctionnement des appareils de base et d'appoint si la température dans l'enceinte à réchauffer est trop élevée, et, dans le cas contraire, met en fonctionnement l'appareil de base, et, si le régulateur le permet, l'appareil d'appoint.

D'autres particularités et avantages de l'invention ressortiront encore de la description ci-après.

Aux dessins annexés, donnés à titre d'exemples non limitatifs:

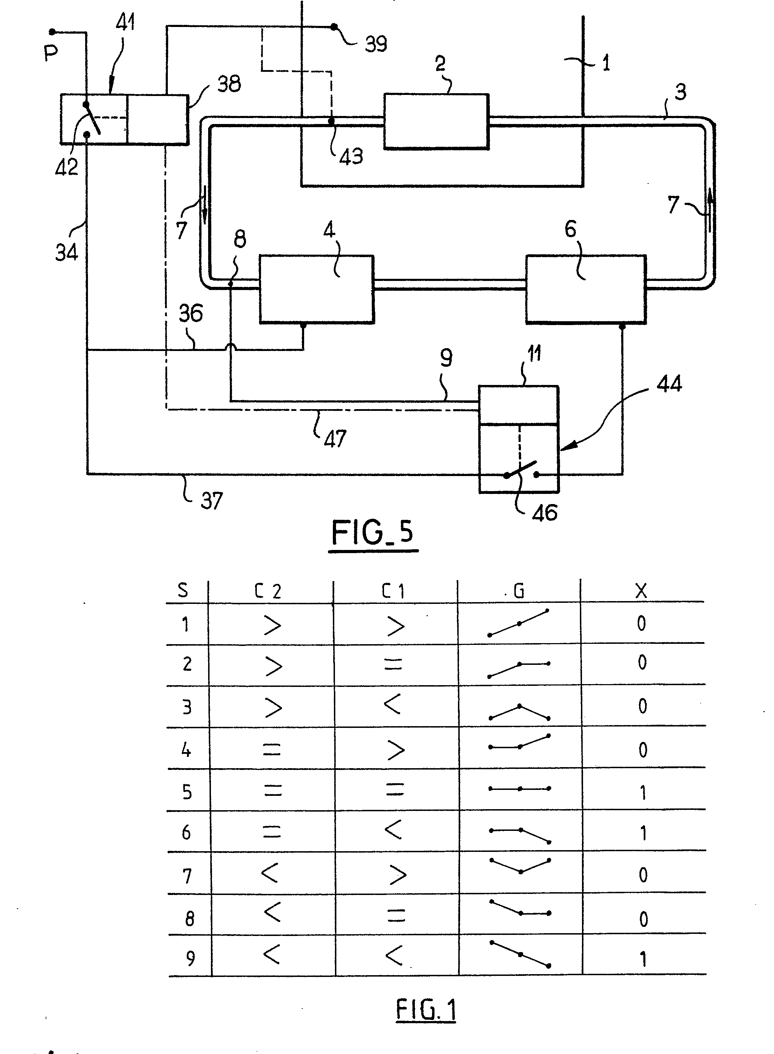

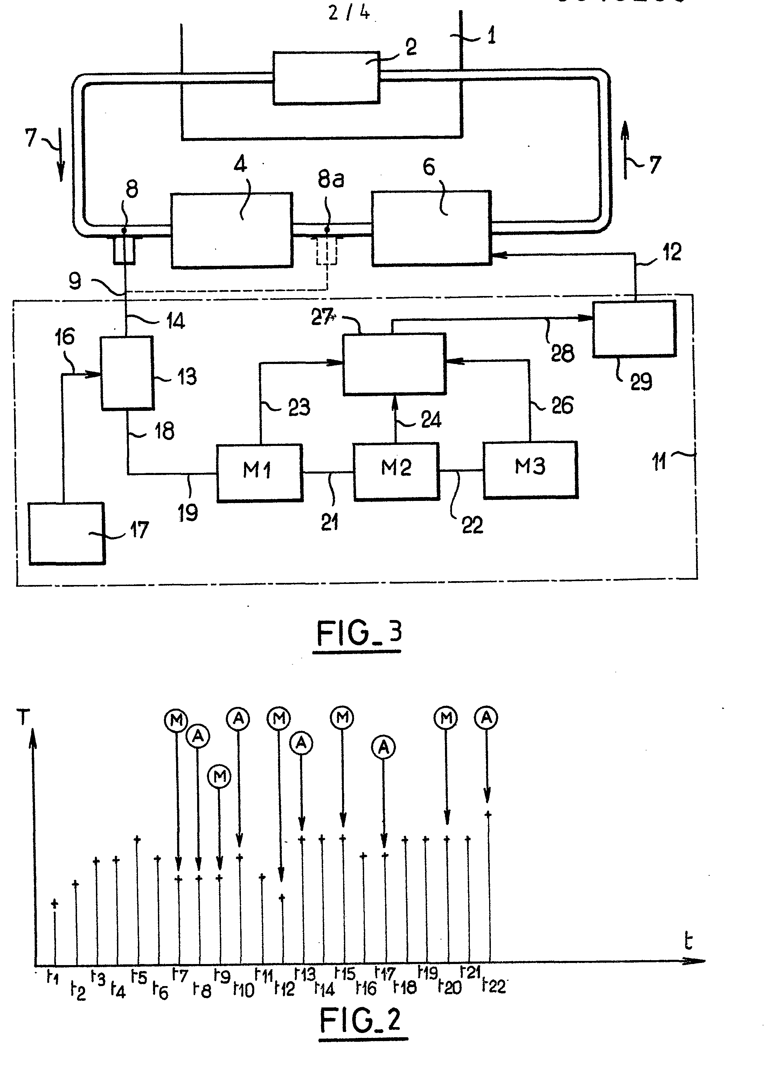

. la figure 1 est un tableau explicitant le procédé conforme à l'invention;

. la figure 2 est le graphique d'un exemple d'application du procédé;

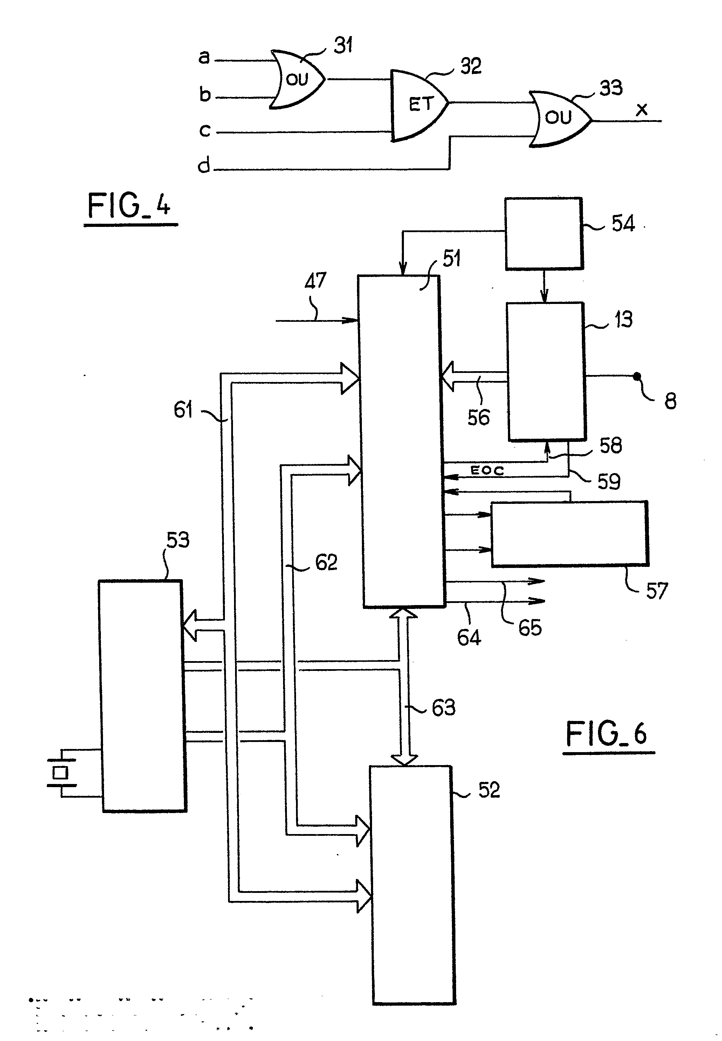

. la figure 3 est une vue schématique d'un régulateur conforme à l'invention monté dans une installation de chauffage;

. la figure 4 est une vue d'une partie de l'unité de calcul;

. la figure 5 est une vue schématique d'une installation de chauffage conforme à l'invention;

. la figure 6 est une vue schématique d'un régulateur conforme à l'invention réalisé sous forme d'un microprocesseur; et

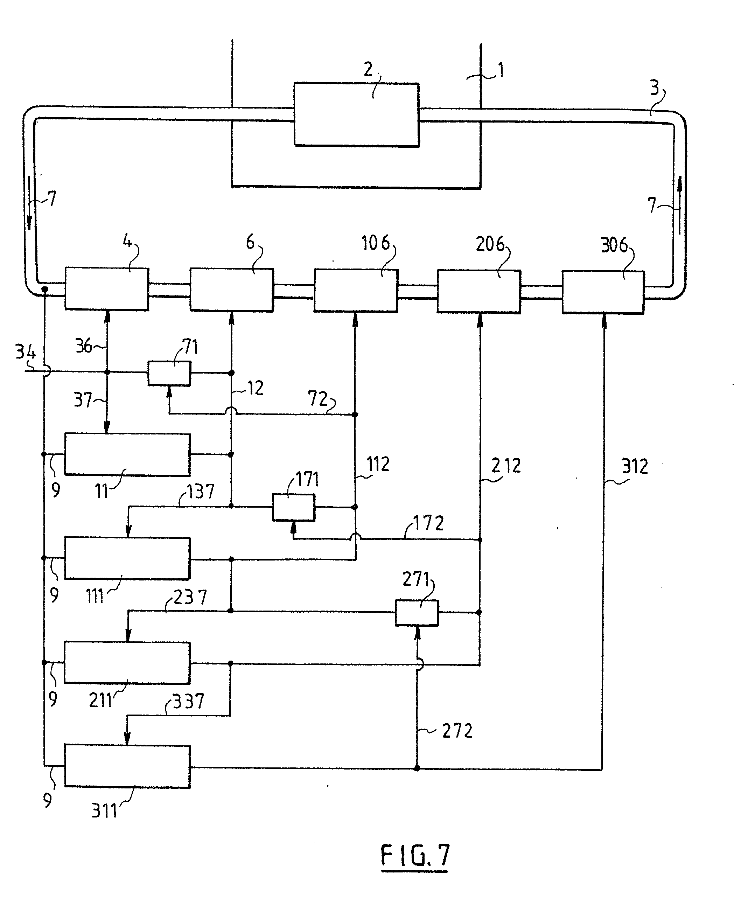

. la figure 7 est une vue analogue à la figure 5, mais concernant une installation de chauffage comprenant cinq appareils de chauffage.

On commencera par décrire sommairement le procédé conforme à l'invention. Celui-ci s'applique à une installation de chauffage du genre représenté à la figure 3 dans lequel un appareil distributeur d'énergie calorifique 2, installé dans une enceinte à réchauffer 1, est monté en série avec un appareil de chauffage de base 4 et un appareil de chauffage d'appoint 6. Le fluide caloporteur traverse dans l'ordre le distributeur 2, l'appareil de base 4 et l'appareil d'appoint 6, selon le sens des flèches 7.

L'appareil de base 4 est par exemple, mais non limitativement, une pompe à chaleur ou un appareil de chauffage à partir de l'énergie solaire, qui tous deux impliquent un investissement initial élevé, mais fournissent de l'énergie calorifique à des coûts très avantageux.

L'appareil d'appoint 6 est par exemple constitué de résistances électriques, ou d'un brûleur à gaz ou à mazout, peu onéreux à l'achat, mais produisant une énergie coûteuse.

Le procédé conforme à l'invention vise à commander le fonctionnement de l'installation en réduisant le plus possible la durée de fonctionnement de l'appoint.

Selon ce procédé, on mesure une température représentative de l'état de l'installation. Dans l'exemple représenté, on mesure cette température à l'aide de la sonde 8, constituée par exemple d'un élément actif au NPN, et fixée au circuit 3 de manière que son organe sensible baigne dans le fluide caloporteur à l'entrée de l'appareil de base 4. Selon une variante, la sonde peut être montée dans la position 8a représentée en pointillés, entre l'appareil de base 4 et l'appareil d'appoint 6. L'essentiel est que la sonde ne soit pas située directement à la sortie de l'appareil d'appoint 6.

Conformément à l'invention, on relève l'évolution de cette température en fonction du temps. Pour étudier cette évolution on échantillonne la température, c'est-à-dire qu'on n'en relève que des valeurs isolées prises à intervalle de temps régulier, comme on l'a représenté dans le cadre d'un exemple à la figure 2 où le temps t est en abscisse et la température T en ordonnées.

De préférence, l'intervalle de temps est réglable pour permettre de l'adapter à l'installation. Dans le cas d'une installation de chauffage domestique, cet intervalle de temps peut être de l'ordre de 2 à 3 minutes.

Selon l'invention, on commande l'arrêt de l'appareil d'appoint 6 lorsqu'on détecte une phase de croissance suffisamment prononcée de la température et on commande la mise en marche de l'appareil d'appoint 6 lorsqu'on détecte une phase de décroissance suffisamment prononcée de la température.

La mise en oeuvre du procédé est visualisée à la figure 1 dans laquelle chaque ligne est relative à un cas d'évolution de température donné, numéroté dans la colonne S, et représenté schématiquement dans la colonne G, la colonne X inqiquant si le chauffage d'appoint 6 est mis ou maintenu à l'arrêt (chiffre 0) ou en marche (chiffre 1).

Dans cet exemple, on compare à chaque intervalle de temps au moins les deux dernières valeurs échantillonnées. A la figure 1, le résultat de cette comparaison est donné à la colonne C1 où le signe > signifie que la valeur la plus récente est la plus grande des deux, le signe < qu'elle est la plus petite des deux et le signe = que les deux valeurs sont égales.

Si la plus récente des valeurs est supérieure à celle qui la précède immédiatement, on considère que la croissance de la température est suffisamment prononcée, et on met ou maintient l'appareil d'appoint 6 à l'arrêt (points $t_{10}$, $t_{13}$, $t_{18}$, $t_{22}$ à la figure 2, et situations 1, 4, 7 à la figure 1).

Si au contraire, la plus récente des valeurs échantillonnées est inférieure ou égale à la précédente, on compare l'avant-dernière valeur échantillonnée à l'antépénultième valeur échantillonnée. Le résultat de cette comparaison est donné à la colonne C2 de la figure 1 avec le même symbolisme qu'à la colonne C1. On commande alors le fonctionnement du chauffage d'appoint 6 selon les critères suivants:

. si la plus récente des valeurs est inférieure à la précédente qui est elle-même inférieure ou égale à l'antépénultième, on considère que la décroissance de la température est suffisamment prononcée et on met ou maintient l'appareil d'appoint 6 en service (points $t_7$, $t_{12}$, $t_{16}$ à la figure 2, situations 6 et 9 à la figure 1);

. si les trois valeurs sont égales, on considère qu'on a affaire à une stagnation suffisamment prononcée et on met ou maintient l'appareil d'appoint 6 en service (points $t_9$, $t_{16}$, $t_{20}$, $t_{21}$ à la figure 2, situation 5 à la figure 1);

. si la valeur intermédiaire est inférieure à l'antépénultième et égale à la plus récente, on met ou maintient l'appareil d'appoint 6 à l'arrêt, car la décroissance n'est pas considérée comme suffisamment prononcée (points $t_8$ et $t_{17}$ à la figure 2, situation 8 à la figure 1);

. si la valeur intermédiaire est supérieure ou égale à la plus récente et supérieure à l'antépénultième, il n'y a pas décroissance ni stagnation suffisamment prononcée et on met ou maintient l'appareil d'appoint 6 à l'arrêt (points $t_4$, $t_6$, $t_{11}$, $t_{14}$, $t_{19}$ à la figure 2, situations 2 et 3 à la figure 1).

Initialement, c'est-à-dire à la mise en route de l'installation de chauffage (point $t_1$), on met l'appareil d'appoint 6 à l'arrêt et on l'y maintient jusqu'à la lecture de la troisième valeur (point $t_3$).

A la figure 2, les lettres M (marche) et A (arrêt) indiquent les changements d'état de l'appareil d'appoint 6. Ces changements d'état interviennent quand la décision prise à l'instant $t_{n+1}$ est opposée à celle prise à l'instant $t_n$.

On comprend que la durée minimale d'une décroissance suffisamment prononcée est de deux intervalles de temps alors que celle d'une croissance suffisamment prononcée est de un intervalle de temps.

D'autres caractéristiques du procédé apparaîtront dans la description du fonctionnement des régulateurs représentés aux figures 3, 4 et 6, et de l'installation représentée à la figure 5.

Comme le montre la figure 3, la sonde 8 ou 8a est reliée à l'entrée 9 d'un régulateur 11 dont la sortie 12, selon qu'elle est à l'état X = 0 ou X = 1, commande respectivement l'arrêt ou le fonctionnement de l'appareil d'appoint 6.

Le régulateur 11 comprend un convertisseur analogique-numérique 13 muni d'une entrée 14 reliée à l'entrée 9 du régulateur et une entrée 16 reliée à une horloge 17.

La sortie 18 du convertisseur 13 est reliée à l'entrée 19 d'une première mémoire M1 dont une sortie 21 constitue l'entrée d'une seconde mémoire M2 dont une sortie 22 constitue à son tour l'entrée d'une troisième mémoire M3.

Les mémoires M1, M2 et M3 présentent en outre chacune une autre sortie 23, 24, 26 respectivement, ces sorties étant reliées chacune à une entrée d'un comparateur 27 dont la sortie 28 est reliée à un bloc de calcul 29. La sortie 12 du régulateur 11 est reliée à la sortie du bloc de calcul 29.

Afin d'éviter des mises en marche du système d'appoint inopportunes, lors de la mise sous tension du chauffage, on adjoint au circuit de calcul un circuit de validation.

Ce circuit est composé d'un registre à décalage qui compte trois prises en température. Lorsque la troisième prise en température est effectuée, le circuit de calcul est validé et les informations présentes sur sa sortie attaquent un relais.

D'autres circuits très importants pour le bon fonctionnement du système mais inutiles pour une bonne compréhension sont nécessaires.

Il faut citer les horloges de génération de tops de prise en température, l'horloge d'échantillonnage, les circuits de pulse, les circuits de retard, les alimentations stabilisées au nombre de cinq et les circuits de visualisation des différents signaux.

Le régulateur fonctionne de la façon suivante:

. le régulateur permet d'enregistrer trois données échelonnées dans le temps et de les comparer deux à deux;

. la sonde 8 branchée sur le circuit de retour d'eau, permet de mesurer la température de retour dans une plage allant de +10°C à +60°C.

Le signal étant amplifié, la variation de tension à la sortie du deuxième amplificateur s'effectue entre 0 V pour +10°C et +10 V pour 60°C.

Cette tension est introduite dans le convertisseur analogique-numérique 13 de huit chiffres binaires, ce qui permet $2^8 = 256$ pas distincts de tension.

Un pas de tension indique la précision de lecture, soit, dans le cas présent:

$$\frac{60 - 10}{256} = \frac{50}{256} = 0,19°C$$

Ceci revient à dire que si la température augmente de 0,19°C, le poids binaire de sortie augmente de 1.

Le mot binaire présent en sortie du convertisseur 13 l'est également en entrée de la première mémoire M1 et celui-ci ne sera pris en compte qu'après que le convertisseur 13 a signalé qu'il a terminé son travail de conversion (signal "end of conversion", ou E.O.C.).

Le front montant du signal E.O.C. de fin de conversion provoque le transfert du contenu de la mémoire M2 vers la mémoire M3, le transfert du contenu de la mémoire M1 vers la mémoire M2, et le transfert du mot binaire qui vient d'être généré de la sortie 18 du convertisseur 13 vers la mémoire M1.

On a donc procédé à un décalage vers la droite de la figure 3 des mots de 8 chiffres binaires.

On compare ensuite le contenu des mémoires (M3 & M2) et (M2 & M1), cette comparaison étant caractéristique de l'évolution de la température dans le circuit de retour, comme on l'a montré en référence à la figure 1.

On désigne respectivement par $T_1$, $T_2$, $T_3$ la plus récente, l'avant-dernière l'antépénultième valeurs de température relevées.

On désigne en outre par $\underline{a}$ le cas où $T_2=T_1$

"           par $\underline{c}$ le cas où $T_3=T_2$

"           par $\underline{b}$ le cas où $T_1 < T_2$

"           par $\underline{d}$ le cas où $T_2 < T_3$

L'équation permettant de donner à X les valeurs énoncées plus haut et regroupées dans le tableau de la figure 1 est alors la suivante:

$$X = (a+b).c+d$$

Le schéma de l'unité de calcul comprend (figure 3) une porte "OU" 31 ayant une entrée $\underline{a}$ et $\underline{b}$ et dont la sortie est reliée à l'une des entrées d'une porte "ET" 32. L'autre entrée de la porte 32 est reliée à $\underline{c}$. Une porte "OU" 33, dont les entrées sont reliées l'une à la porte 32, l'autre à $\underline{d}$, donne l'information X à sa sortie conformément à l'équation ci-dessus.

Comme le montre la figure 5, une installation conforme à l'invention est alimentée électriquement entre une phase P et un neutre non représenté. La phase P, est conduite d'abord par une branche commune 34 qui est ensuite divisée en une branche 36 reliée à l'appareil de base 4 et une branche 37 reliée à l'appareil d'appoint 6.

Un thermostat 38 dont l'organe sensible 39 est monté dans l'enceinte à chauffer, commande un relais 41 dont le contact interrupteur 42 est monté sur la branche 34.

L'organe sensible 39 peut être remplacé par un organe sensible 43 baignant dans le fluide caloporteur à proximité du distributeur d'énergie calorifique 2, comme représenté en pointillés à la figure 4.

Un régulateur 11, par exemple du genre représenté à la figure 2, a son entrée 9 reliée à la sonde 8.

La sortie telle que 12 (non représentée) du régulateur 11 est reliée au bobinage d'un relais 44 dont le contact interrupteur 46 est monté sur la branche 37.

Des moyens non représentés sont prévus pour inhiber l'unité de calcul 29 (figure 3 ) du régulateur 11 au début du fonctionnement de l'installation jusqu'à ce que la troisième valeur échantillonnée soit en mémoire, et pour effacer le contenu des mémoires à la fin du fonctionnement de l'installation.

Ces moyens sont en liaison avec le thermostat 38, comme le montre le trait mixte 47.

L'installation qui vient d'être décrite fonctionne de la façon suivante:

Lorsque la température relevée au niveau de l'organe sensible 39 ou 43 est trop faible par rapport à la température de consigne, le thermostat 38 provoque la fermeture du contact 42.

L'appareil de base 4 est alors alimenté électriquement et commence à réchauffer le fluide caloporteur. Cependant, du fait des moyens pour inhiber l'unité de calcul 29, le contact 46 est ouvert et l'appareil d'appoint 6 reste à l'arrêt jusqu'à ce que la troisième valeur échantillonnée soit en mémoire.

Quand cette troisième valeur est effectivement en mémoire M1, le fonctionnement du régulateur peut par exemple être du genre représenté à la figure 2.

Si la température relevée par l'organe sensible 39 ou 43 devient trop élevée par rapport à la consigne, le thermostat 38 commande l'ouverture du contact 42 et l'alimentation vers les appareils de base 4 et d'appoint 6 est interrompue.

Le contenu des mémoires M1, M2, M3 est effacé, le contact 46 s'ouvre s'il n'était pas déjà ouvert, et l'installation est prête pour une nouvelle demande de chauffe provenant du thermostat 38.

Comme le montre la figure 6, le régulateur peut encore être réalisé sous forme d'un micro-processeur.

Ce régulateur comprend comme celui de la figure 3 un convertisseur analogique-numérique 13 relié à la sonde 8, une mémoire à lecture seule 51, une mémoire à accès 52 et une unité centrale 53.

Une alimentation stabilisée 54 est branchée à la fois sur le convertisseur 13 et sur la mémoire à lecture seule 51.

Un groupe de huit lignes 56 relie le convertisseur 13 à la mémoire 51 pour transposer les valeurs échantillonnées calculées par le convertisseur dans la mémoire 51.

Un compteur programmable 57, relié à la mémoire 51, permet de disposer d'une horloge fournissant à la mémoire 51 des tops à intervalle de temps réglable de 2 à 9 secondes par exemple.

Ces tops sont retransmis de la mémoire 51 au convertisseur 13 par la liaison d'échantillonnage 58. Une autre liaison 59 permet au convertisseur 13 d'envoyer à la mémoire 51 le signal de fin de conversion chaque fois que la mise sous forme binaire d'une valeur échantillonnée est terminée.

La ligne 47 provenant du thermostat est reliée à la mémoire 51 pour commander l'effacement des valeurs en mémoire lors de l'arrêt de l'installation.

Un groupe de lignes 61 ou "BUS de données" sert au transfert des données de la mémoire 51 vers l'unité centrale 53 et de celle-ci vers la mémoire 52.

Un groupe de lignes 62 ou "BUS de contrôle" est affecté au contrôle dans les mémoires 51, 52 des opérations (lecture, écriture, etc.) demandées par l'unité centrale 53. Enfin, un groupe de lignes 63 ou "BUS d'adresses" sert à fournir dans les mémoires 51, 52 l'adresse de l'information visée par l'unité centrale 53.

Ce régulateur a deux sorties 64, 65 identiques mis à part un décalage dans le temps de l'une par rapport à l'autre.

Le fonctionnement de ce régulateur est sensiblement le même que celui de la figure 2 si toutefois l'on n'entre pas dans les détails de l'électronique.

Dans l'exemple représenté à la figure 7, l'installation comporte cinq appareils de chauffe comprenant un appareil de base 4 et quatre appareils d'appoint 6, 106, 206, 306 montés en série sur le circuit de fluide caloporteur 3, dans cet ordre relativement au sens 7 d'écoulement du fluide caloporteur.

Ces cinq appareils 4, 6, 106, 206, 306 peuvent être tous identiques, mais sont ordonnés selon une hiérarchie d'emploi, l'appareil de base 4 étant bien entendu employé en priorité.Vient ensuite l'appareil 6 qui est employé dès que l'appareil 4 ne suffit pas, puis dans cet ordre les appareils 106, 206, 306.

L'installation comprend en outre la sonde 8 montée en amont de l'appareil 4, et quatre régulateurs 11, 111, 211, 311 analogues au régulateur 11 des figures 3 à 6, commandant le fonctionnement des appareils 6, 106, 206, 306, respectivement. La sonde 8 est reliée à l'entrée 9 de chacun des régulateurs 11, 111, 211, 311.

L'agencement des appareils 4 et 6 du régulateur 11 et de la ligne 34 avec ses branches 36 et 37 est analogue à celui de la figure 5.

Les régulateurs 111, 211, 311 commandent comme le régulateur 11 un commutateur tel que 46 (figure 5) autorisant ou interdisant le passage du courant sur les lignes 112, 212, 312. Cependant, les lignes 137, 237, 337 d'entrée sur chaque commutateur sont branchées sur les lignes 12, 112, 212 à la sortie du régulateur 11, 111, 211 commandant l'appareil de chauffage immédiatement en amont, qui vient juste avant dans la hiérarchie d'emploi.

En outre, chacun des régulateurs 11, 111, 211 a son entrée 37, 137, 237 reliée à sa sortie par le contact d'un relais à temporisation 71, 171, 271. Chaque relais 71, 171 ou 271 est en outre relié à la ligne 112, 212 ou 312, à l'entrée de l'appareil de chauffage 106, 206 ou 306 monté juste en aval de l'appareil auquel le relais considéré 71, 171 ou 271 est affecté. A titre illustratif, on a porté sur la figure 7 des lignes 72, 172, 272 figurant cette liaison entre les relais 71, 171, 271 et les entrées de commande des appareils 6, 106, 206.

Le fonctionnement de cette installation est le suivant:

Lorsque la ligne 34 est alimentée, que seul le chauffage de base 4 fonctionne, et que les appareils 6, 106, 206, 306 sont à l'arrêt, seul le régulateur 11 fonctionne. En effet comme la sortie des régulateurs 11, 111, 211 est à l'état X=0, les entrées 137, 237, 337 des régulateurs 111, 211, 311 ne sont pas alimentées.

Si le régulateur 11 déclenche la mise en marche de l'appareil 6, le régulateur 111 est alimenté et commence à relever l'évolution des températures. En outre le fait que l'entrée 12 de l'appareil 6 est à l'état X=1 provoque la fermeture du contact du relais 71 de sorte que le régulateur 11 est court-circuité. Tant que le régulateur 111 n'a pas décidé la mise en marche de l'appareil 106, ce qui ne peut intervenir qu'après que trois valeurs échantillonnées de température aient été relevées, la sortie 112 est à l'état X=0 de sorte que les régulateurs 211, 311 ne fonctionnent toujours pas.

On comprend donc qu'en cas de baisse et/ou de stagnation persistante de la température relevée par la sonde 8, les appareils 6, 106, 206, 306 s'enclenchent les uns à la suite des autres tandis que les régulateurs affectés aux appareils d'appoint qui sont en marche, à l'exception de l'appareil en marche qui est le plus en aval sur le circuit 3, sont court-circuités par les relais 71, 171, 271.

Lorsque tous les appareils sont en marche et que la température évolue de façon propre à provoquer l'arrêt des appareils 6, 106, 206, 306, tous les régulateurs 11, 111, 211, 311 interrompent simultanément la liaison entre leur entrée 37, 137, 237, 337 et leur sortie 12, 112, 212, 312.

Cependant, seul l'appareil 306 s'arrête immédiatement car les régulateurs 11, 111, 211 affectés aux autres appareils 6, 106, 206 sont court-circuités par les relais 71, 171, 271 qui maintiennent les entrées 12, 112, 212 de ces appareils à l'état X=1.

La liaison 272 étant maintenant à l'état X=0, le relais à temporisation 271 bascule avec un retard prédéterminé et interrompt l'alimentation directe de la ligne 212 qui passe à l'état X=0. Ceci provoque l'arrêt de l'appareil 206 et du régulateur 311, et constitue le point de départ du délai de temporisation avant l'ouverture du relais 171.

Si la température recommence à évoluer défavorablement avant que le relais 171 n'ait basculé, les sorties 12, 112, 212 des régulateurs 11, 111, 211, dont l'entrée 37, 137, 237 est à l'état X=0, repassent simultanément à l'état X=1, la ligne 172 commande à nouveau la fermeture du relais 171 qui n'avait pas eu le temps de s'ouvrir, et le régulateur 311 se remet en fonctionnement.

Bien entendu, l'invention n'est pas limitée aux exemples qui viennent d'être décrits et de nombreux aménagements peuvent être apportés à l'invention sans sortir de son cadre.

C'est ainsi que l'invention peut être appliquée à tout système de chauffage, pour toute utilisation.

Le circuit de fluide caloporteur peut être ouvert, comme c'est le cas si le liquide caloporteur est identique au milieu à réchauffer, par exemple pour le chauffage de l'eau des piscines.

L'appareil d'appoint peut être monté en amont de l'appareil de base, en parallèle avec lui, ou bien sur un circuit distinct, ou encore directement dans le milieu à réchauffer. Ce pourrait par exemple être un ou plusieurs convecteurs électriques installés dans le milieu à réchauffer.

Le nombre de mémoires du régulateur peut être supérieur à trois, et la décision peut être prise par comparaison de plus de trois températures.

Par ailleurs, on peut prévoir la possibilité d'inverser manuellement ou automatiquement les rôles des appareils de chauffage, l'appareil de base devenant l'appareil d'appoint et vice-versa. Pour cela, il suffit que la ligne 36 puisse être branchée au choix sur l'appareil 4 ou l'appareil 6, la sortie 12 étant systématiquement branchée sur l'autre appareil. Ceci peut être intéressant par exemple quand l'un des deux appareils est électrique et bénéficie d'une tarification avantageuse à certaines heures.

REVENDICATIONS

1. Procédé pour commander le fonctionnement d'une installation de chauffage comprenant au moins deux appareils de chauffage, à savoir un appareil de chauffage de base (4), et un appareil de chauffage d'appoint (6, 106, 206, 306), en vue de mettre sélectivement en fonctionnement l'appareil d'appoint en plus de l'appareil de base en fonction des besoins, procédé dans lequel on mesure une température représentative de l'état de l'installation, caractérisé en ce qu'on relève l'évolution de cette température en fonction du temps, en ce qu'on autorise l'arrêt de l'appareil d'appoint (6) lorsqu'on détecte une phase de croissance suffisamment prononcée de la température et en ce qu'on autorise la mise en marche de l'appareil d'appoint lorsqu'on détecte une phase de décroissance suffisamment prononcée de la température.

2. Procédé conforme à la revendication 1, caractérisé en ce que la durée minimale d'une phase de décroissance suffisamment prononcée est plus grande que celle d'une phase de croissance suffisamment prononcée.

3. Procédé conforme à la revendication 1 ou 2, caractérisé en ce qu'on autorise la mise en marche de l'appareil d'appoint (6) si l'on détecte une stagnation suffisamment prononcée de la valeur de la température.

4. Procédé conforme à la revendication 3, caractérisé en ce qu'on commande l'arrêt de l'appareil d'appoint (6) si on détecte une phase de décroissance suivie d'une phase de stagnation de la température, toutes deux trop courtes pour être considérées comme suffisamment prononcées.

5. Procédé conforme à l'une des revendications 1 à 4, dans lequel l'appareil de base (4) et d'appoint (6) sont montés en série sur un circuit de fluide caloporteur commun (3), caractérisé en ce qu'on prend comme température représentative de l'état de l'installation la température de ce fluide à l'entrée de l'appareil d'appoint (6).

6. Procédé conforme à l'une des revendications 1 à 5, caractérisé en ce que pour relever l'évolution de la température, on échantillonne les mesures de cette température et on compare entre elles les valeurs échantillonnées.

7. Procédé conforme à la revendication 6, caractérisé en ce qu'on considère une décroissance ou une stagnation de la température comme suffisamment prononcée si elle est relevée sur trois valeurs échantillonnées successives.

8. Procédé conforme à l'une des revendications 6 ou 7, caractérisé en ce qu'on commence à analyser l'évolution de la température un certain temps après la mise en marche de l'appareil de base (4).

9. Procédé conforme à l'une des revendications 6 à 8, caractérisé en ce qu'on fait entrer chaque valeur échantillonnée dans une première mémoire (M1), puis dans une seconde mémoire (M2) quand une nouvelle valeur échantillonnée est prête à être entrée dans la première mémoire (M1), puis dans une troisième mémoire (M3) quand une troisième valeur échantillonnée est prête à son tour à être entrée dans la première mémoire (M1).

10. Procédé conforme à la revendication 9, caractérisé en ce qu'on commande la mise en marche de l'appareil d'appoint (6, 106, 206, 306) lorsque la fonction logique:

$$X = (a+b).c+d$$

prend la valeur 1, avec:

a=1 si les valeurs contenues dans les deux premières mémoires (M1, M2) sont égales;

b= 1 si le contenu de la première mémoire (M1) est inférieur à celui de la seconde mémoire (M2);

c=1 si les valeurs contenues dans les deux dernières mémoires (M2, M3) sont égales;

d=1 si le contenu de la seconde mémoire (M2) est inférieur à celui de la troisième mémoire (M3).

11. Régulateur de fonctionnement pour une installation de chauffage comprenant au moins deux appareils de chauffage à savoir un appareil de chauffage de base (4) et un appareil de chauffage d'appoint (6, 106, 206, 306), notamment pour la mise en oeuvre du procédé selon l'une des revendications 1 à 10, caractérisé en ce qu'il comprend un convertisseur analogique-numérique (13) dont une entrée (9) est destinée à être reliée à une sonde de température (8) dont l'organe sensible est au contact d'un milieu soumis à une température représentative de l'état de l'installation, des moyens (M1, M2, M3, 51) pour mettre en mémoire au moins les deux dernières valeurs numériques provenant du convertisseur (13), des moyens (27, 53) de comparaison de ces valeurs numériques et des moyens (29, 46, 12, 53, 51, 64, 65) de commande de l'appareil d'appoint (6, 106, 206, 306) en fonction du résultat de cette comparaison.

12. Régulateur conforme à la revendication 11, caractérisé en ce qu'il comprend des moyens (M1, M2, M3, 51) pour mettre en mémoire les trois dernières valeurs numériques provenant du convertisseur, des moyens (27, 53) pour comparer la première et la deuxième ainsi que la deuxième et la troisième de ces valeurs, et un système logique (28, 53) pour décider la mise en route et l'arrêt de l'appareil d'appoint (6, 106, 206, 306) en fonction du résultat de ces comparaisons.

13. Installation de chauffage, mettant notamment en oeuvre le procédé selon l'une des revendications 1 à 10, comprenant au moins un appareil de chauffage de base (4) et un appareil de chauffage d'appoint (6, 106, 206, 306), une sonde de température (8) dont l'organe sensible est en contact avec un milieu (3) dont la température est représentative de l'état de l'installation, et un régulateur (11, 111, 211, 311) commandant le fonctionnement de l'appareil en fonction de l'évolution de cette température, caractérisée en ce que cette installation comprend en outre un système thermostatique (41) qui commande la mise en marche et l'arrêt de l'appareil de base (4) et qui en même temps, interdit ou autorise la marche de l'appareil d'appoint (6, 106, 206, 306).

14. Installation de chauffage conforme à la revendication 13, caractérisée en ce qu'elle comprend plusieurs appareils de chauffage d'appoint (6, 106, 206, 306), un régulateur (11, 111, 211, 311) commandant le fonctionnement de chaque appareil d'appoint (6, 106, 206, 306), ces régulateurs étant tous couplés à la sonde 8 et comprenant chacun des moyens (46) pour mettre sélectivement en contact une entrée (37, 137, 237, 337) avec une sortie (12, 112, 212, 312) reliée à l'entrée de l'appareil d'appoint correspondant, l'une de ces entrées (37) étant reliée à la sortie (34) du système thermostatique (41), chaque autre entrée (137, 237, 337) étant reliée à la sortie (12, 112, 212) du régulateur (11, 111, 211) affecté à l'appareil d'appoint venant immédiatement avant dans une hiérarchie d'emploi selon laquelle les appareils d'appoint sont ordonnés.

15. Installation de chauffage conforme à la revendication 14, caractérisée en ce que chaque régulateur (11, 111, 211), sauf celui (311) qui est le dernier dans la hiérarchie d'emploi, a son entrée (37, 137, 237) reliée à sa sortie (12, 112, 212) par le contact d'un relais à temporisateur (71, 171, 271), avec retard à l'ouverture, qui est fermé quand l'appareil d'appoint (106, 206, 306) venant immédiatement après dans la hiérarchie d'emploi est en fonctionnement.

16. Installation de chauffage conforme à l'une des revendications 13 à 15, caractérisée en ce que l'appareil de base (4) est choisi parmi les appareils suivants: pompe à chaleur, appareil fonctionnant à partir de l'énergie solaire.

17. Installation conforme à l'une des revendications 13 à 16, caractérisée en ce que l'appareil d'appoint (6) est choisi parmi les appareils suivants: résistances électriques, brûleur à gaz, brûleur à mazout.

0045266

FIG_5

| S | C 2 | C 1 | G | X |
|---|-----|-----|---|---|
| 1 | > | > | | 0 |
| 2 | > | = | | 0 |
| 3 | > | < | | 0 |
| 4 | = | > | | 0 |
| 5 | = | = | | 1 |
| 6 | = | < | | 1 |
| 7 | < | > | | 0 |
| 8 | < | = | | 0 |
| 9 | < | < | | 1 |

FIG.1

0045266

FIG_3

FIG_2

FIG_4

FIG_6

FIG. 7